(19) Europäisches Patentamt
European Patent Office
Office européen des brevets

(11) **EP 3 466 735 A1**

(12) **DEMANDE DE BREVET EUROPEEN**

(43) Date de publication:
**10.04.2019 Bulletin 2019/15**

(51) Int Cl.:
*B60K 6/445* (2007.10)  *B60K 6/383* (2007.10)
*B60K 6/387* (2007.10)  *B60K 6/405* (2007.10)
*F16H 3/72* (2006.01)  *F16H 57/04* (2010.01)
*F16H 37/08* (2006.01)

(21) Numéro de dépôt: **18183210.6**

(22) Date de dépôt: **12.07.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.10.2017 FR 1759238**

(71) Demandeur: **RENAULT s.a.s.**
**92100 Boulogne-Billancourt (FR)**

(72) Inventeurs:
• **CAILLETON, Louis**
**91680 Bruyeres-le-chatel (FR)**
• **COLOMBAT, Pierre**
**91300 Massy (FR)**
• **RAOUL, Michel**
**78990 Elancourt (FR)**

(54) **TRANSMISSION INFINIMENT VARIABLE A TRAIN DIVISEUR DE PUISSANCE ET PROCEDE DE FONCTIONNEMENT DE CELLE-CI**

(57) Transmission infiniment variable à train épicycloïdal diviseur de puissance (8) qui relie mécaniquement un moteur thermique et deux machines électriques (11, 13) échangeant entre elles de la puissance électrique, transmission dans laquelle la puissance mécanique du moteur thermique introduite dans le train (8) se répartit au niveau d'un élément (21) du train entre une première voie de puissance où elle est prélevée par une première machine électrique (11), et une deuxième voie de puissance où elle est réunie à la puissance mécanique de la deuxième machine électrique (13) et se regroupe sur un élément de sortie du train (8) d'où elle est transmise aux roues du véhicule sur un rapport de transmission variable en fonction de la puissance électrique échangée entre les deux machines électriques (11, 13), caractérisée en ce qu'elle comporte un groupe de couplage (9) entre la première machine électrique (11) et les deux autres sources motrices, constitué d'un un système à crabot capable de réaliser une liaison entre le planétaire (20) et le porte-satellites (27) du train (8) pour faire tourner la transmission en bloc sur un rapport fixe.

**Fig. 3**

**Description**

La présente invention concerne les variateurs de vitesse, ou transmissions infiniment variables (dites CVT pour « *Continuously Variable Transmission* » en anglais), dont le rapport entre la vitesse d'entrée et la vitesse de sortie, varie de manière continue.

Plus précisément, elle a pour objet une transmission infiniment variable à train épicycloïdal diviseur de puissance qui relie mécaniquement un moteur thermique et deux machines électriques échangeant entre elles de la puissance électrique, transmission dans laquelle la puissance mécanique du moteur thermique se répartit au niveau d'un élément d'entrée du train entre une première voie de puissance où elle est prélevée par une première machine électrique, et une deuxième voie de puissance, où elle est réunie à la puissance mécanique de la deuxième machine électrique, et se regroupe sur un élément de sortie du train d'où est transmise aux roues du véhicule sur un rapport de transmission variable en fonction de la puissance électrique échangée entre les deux machines électriques.

Dans les variateurs basés sur un train épicycloïdal, on ajuste le ratio en imposant un différentiel de vitesse entre deux éléments du train. Lorsqu'on fait varier le régime de rotation d'un composant du train, le ratio de réduction entre deux autres éléments varie en conséquence.

Par la publication EP 1 125 780, on connaît une chaîne cinématique hybride dite e-CVT, comportant un moteur thermique et une transmission basée sur un train épicycloïdal, utilisant deux machines électriques pour faire varier son ratio de transmission. Le moteur thermique est connecté au porte-satellites du train. Une première machine électrique est connectée au planétaire. En faisant varier sa vitesse, on fait varier le ratio entre le moteur thermique et les roues, qui sont connectées à la couronne, ainsi qu'à une deuxième machine électrique. En faisant varier la vitesse de la première machine électrique, on fait varier le ratio de transmission entre le moteur thermique et les roues.

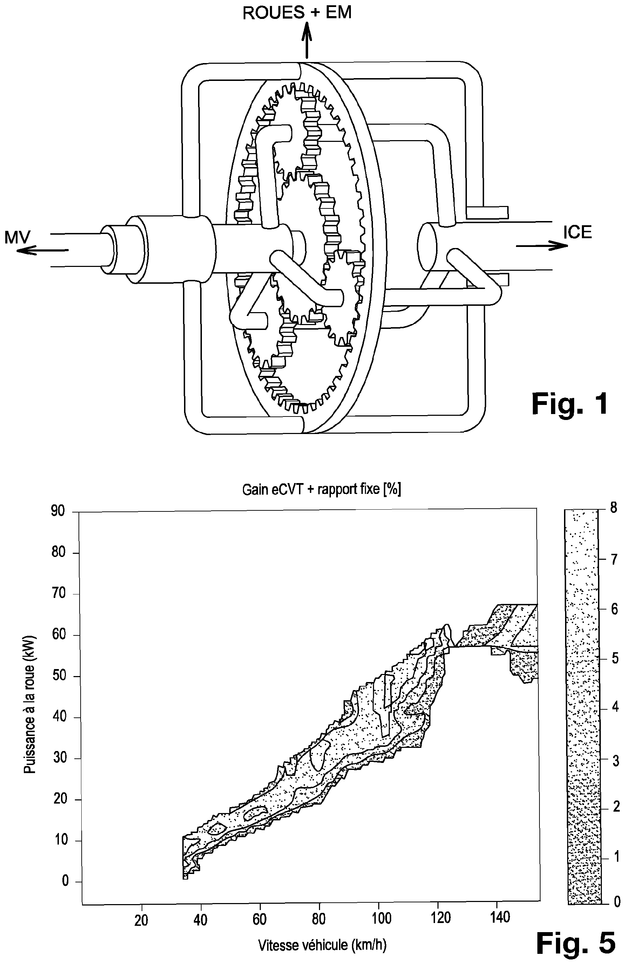

Dans le cas d'un véhicule conventionnel, toute l'énergie apportée aux roues provient du moteur thermique. Le rôle principal de l'e-CVT est d'ajuster le ratio entre le moteur thermique et les roues. Selon le schéma de la figure 1, la machine MV peut prélever de la puissance mécanique au moteur thermique ICE ou fournir de la puissance mécanique (et donc produire ou consommer de la puissance), selon la manière dont elle est pilotée. On utilise alors la seconde machine EM pour dépenser ou produire l'énergie électrique permettant de faire fonctionner la machine MV, et ainsi de rester à bilan énergétique nul (pas de stockage ni de dépense électrique). Dans le cas d'un véhicule hybride, la machine permet d'assurer le roulage électrique et la récupération d'énergie au freinage.

Dans cette architecture, si R est la « raison » du train (rapport R entre le nombre de dents de la couronne et celui du planétaire) et K est le rapport de réduction entre la couronne du train et les roues du véhicule, les principales équations du système sont les suivantes :

$$\omega_{EM} = K \times \omega_{roue},$$

$$\omega_{MV} = (1+R) \times \omega_{ice} - K \times R \times \omega_{roue},$$

$$C_{MV} = -(1/1+R) \times C_{ice},$$

$$C_{EM} = [-R/(1+R)] \times C_{ice} + [C_{roue}/K]$$

Le ratio de réduction entre le moteur thermique et la roue $\omega_{ice}/\omega_{roue}$ de l'e-CVT peut alors s'exprimer :

$$\omega_{ice}/\omega_{roue} = \omega_{MV}/(\omega_{roue}(1+R)) + K*R/(1+R)$$

Le couple de la machine MV est à tout instant proportionnel au couple du moteur thermique ICE, avec un coefficient de proportionnalité fixe. En ajustant la vitesse de rotation de la machine MV (qui peut tourner dans un sens ou dans l'autre), on peut prélever ou fournir une puissance mécanique (P = Couple x vitesse), et ainsi réduire ou augmenter le ratio de réduction ente le moteur thermique et la roue.

Le rendement de l'e-CVT dépend de son ratio de réduction $\omega_{ice}/\omega_{roue}$. Si la machine MV ne tourne pas, $\omega_{mv} = 0$, donc $\omega_{ice}/\omega_{roue} = K*R/(1+R)$. Le taux de dérivation est nul, et la transmission est à son rendement maximum, car aucune puissance mécanique n'est prélevée ou fournie par la machine MV. En revanche, dès qu'on s'éloigne du ratio correspondant à $\omega_{mv}=0$, le rendement de la transmission se dégrade.

Il est préférable de choisir K et R de telle manière à ce que le ratio présentant le meilleur rendement e-CVT soit proche du ratio permettant d'exploiter au mieux le moteur thermique. Dans la pratique, il est difficile de choisir les paramètres K et R permettant de maximiser le rendement de l'e-CVT dans toutes les conditions. Ainsi, pour un véhicule destiné à un usage urbain, le ratio à optimiser est plus important, que pour un véhicule destiné à un usage autoroutier.

La présente invention a pour but d'établir un second ratio, pour lequel le rendement de l'e-CVT est optimisé.

Dans ce but, la transmission comporte un groupe de couplage entre la première machine électrique et une des deux autres sources motrices, pour faire tourner la transmission en bloc sur un rapport fixe.

Ce groupe de couplage est constitué d'un un système à crabot capable de réaliser une liaison entre le planétaire et le porte-satellites du train pour faire tourner la transmission en bloc sur un rapport fixe.

Dans un premier mode de réalisation de l'invention, le moteur thermique est relié au porte-satellites du train, la première machine électrique au planétaire, et la deuxième machine électrique à la couronne de sortie.

Dans un deuxième mode de réalisation de l'invention, le moteur thermique est relié à la couronne, la première machine électrique au planétaire, et la deuxième machine motrice porte-satellites.

La transmission dispose d'un premier mode de fonctionnement, dans lequel le système de couplage est ouvert, où la puissance dérivée sur la première machine électrique varie en fonction du régime du moteur thermique. Elle dispose aussi d'un deuxième mode de fonctionnement, dans lequel le système de couplage est fermé, où la totalité de la puissance du moteur thermique se retrouve sur la couronne de sortie du train.

Le choix de passer sur le rapport fixe, peut être fait à partir d'une cartographie indiquant s'il est intéressant de basculer sur le rapport fixe d'un point de vue énergétique, en fonction de la vitesse du véhicule et de la puissance à la roue.

La présente invention sera mieux comprise à la lecture de la description suivante d'un mode de réalisation non limitatif de celle-ci, en se reportant aux dessins annexés, sur lesquels :

- la figure 1 est un schéma cinématique simplifié de transmission du type e-CVT électrique,
- la figure 2 décrit l'architecture proposée,
- la figure 3 est un agrandissement partiel de la figure 2,
- les figures 4A et 4B illustrent le fonctionnement de la transmission,
- la figure 5 montre des gains en consommation obtenus grâce à l'invention, et
- la figure 6 résume une stratégie de pilotage de la transmission

Le système e-CVT classique illustré par la figure 1 est composé de quatre éléments principaux : un train épicycloïdal, qui relie mécaniquement une première machine électrique MV, une seconde machine électrique EM et un moteur thermique ICE qui est la source principale de traction. Les machines électriques EM et MV permettent d'adapter le ratio de réduction entre le moteur thermique et les roues. Le rotor de la première machine électrique MV est en liaison pivot avec le bâti (non représenté) du groupe motopropulseur (GMP), et constitue le planétaire du train. Le rotor de la deuxième machine électrique EM est en liaison pivot avec le bâti du GMP. Il est lié à la couronne du train. Le moteur thermique ICE constitue le porte-satellites du train. Les roues sont liées à ce mécanisme par l'intermédiaire de la couronne du train et des étages de réductions supplémentaires sur le différentiel.

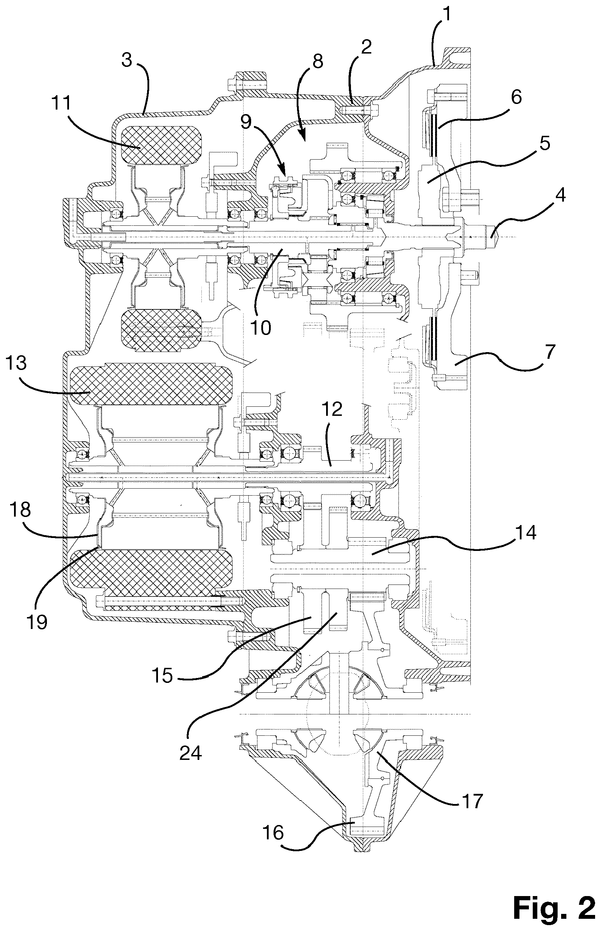

Sur la figure 2, on distingue de la droite vers la gauche, un carter de volant et de différentiel 1, le carter de mécanismes 2, et le carter de machines électriques 3 de la transmission proposée. Il s'agit d'une transmission infiniment variable à train épicycloïdal diviseur de puissance qui relie mécaniquement un moteur thermique et deux machines électriques échangeant entre elles de la puissance électrique. La puissance mécanique du moteur thermique se répartit au niveau d'un élément d'entrée du train entre une première voie de puissance où elle est prélevée par une première machine électrique, et une deuxième voie de puissance, où elle est réunie à la puissance mécanique de la deuxième machine. La puissance se regroupe sur un élément de sortie du train d'où est transmise aux roues du véhicule sur un rapport de transmission variable en fonction de la puissance électrique échangée entre les deux machines électriques.

Dans le premier carter 1, on voit le vilebrequin 4, un amortisseur 5, un limiteur de couple 6, et un volant d'inertie classique 7 de moteur thermique (non représenté). Le carter de mécanismes 2 renferme un train épicycloïdal diviseur de puissance 8, avec son groupe de couplage 9, qui sont agrandis sur la figue 3. Le groupe 9 assure un couplage entre la première machine électrique et une des deux autres sources motrices pour faire tourner la transmission en bloc sur un rapport fixe. Dans le mode de réalisation non limitatif, décrit par les figures, le moteur thermique est relié au porte-satellites du train, la première machine électrique à son planétaire, et la deuxième machine électrique à sa couronne de sortie.

Le train 8 est en appui sur le carter de volant 1 par une roue libre, avec limiteur de couple. La roue libre permet d'utiliser la génératrice en moteur pour les roulages en mode électrique. Le groupe de couplage 9 est en appui sur le carter de volant 1 de la transmission par une roue libre 30 avec limiteur de couple. La particularité de cette roue libre est son agencement dans la boîte, donc dans l'huile, et son limiteur de couple, qui protège ses pistes et son accrochage sur carter des sur-couples par exemple en cas de freinage violent.

L'arbre primaire 10 de la transmission, porte à son extrémité opposée au moteur thermique, une machine électrique ayant fonction de génératrice 11. La transmission comporte un arbre secondaire 12 portant la deuxième machine électrique 13 13 qui a la fonction de motrice. Elle comporte également un arbre intermédiaire 14 portant un pignon intermédiaire de motrice 15 et un pignon intermédiaire de génératrice et de moteur thermique 15a, transférant l'ensemble du mouvement sur la couronne 16 du différentiel 17. Une gouttière 18 force l'huile à être au contact des flancs du rotor de la deuxième machine électrique 13. Elle se termine par un déflecteur 19, qui oriente l'huile vers les bobinages du stator de la motrice, en la détournant de l'entrefer.

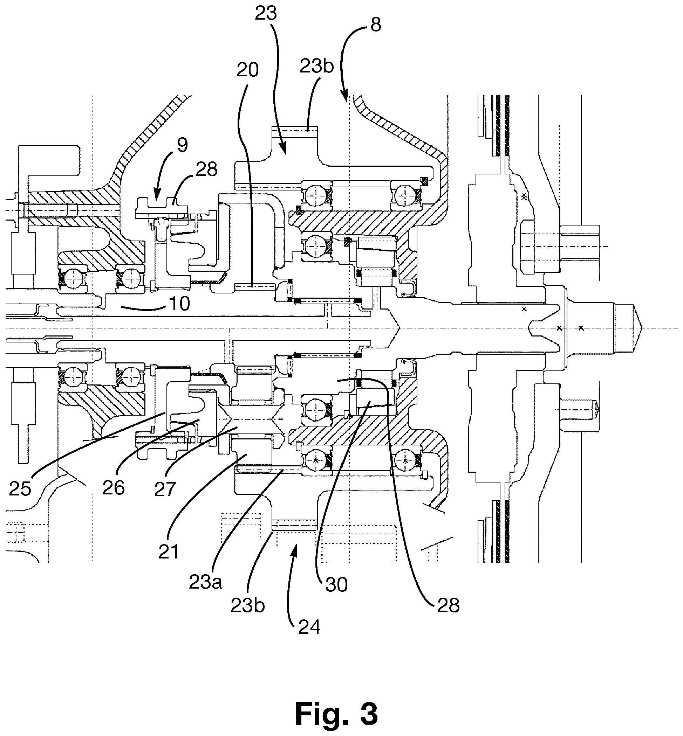

Sur la figure 3 on retrouve le train diviseur de couple 8 et son système de couplage 9. Le couplage du moteur thermique et de la première machine électrique s'effectue sur l'arbre primaire 10 de la transmission, fixé au vilebrequin 4 du moteur thermique, qui porte à son extrémité opposée à celui-ci, la première machine électrique 11.

Le train 8 est composé d'une denture planétaire 20 de l'arbre de planétaire 10, de satellites 21 portés par un porte-satellites 27, et d'une couronne 23 dont la denture interne 23a engrène avec les satellites 21, et la denture externe 23b engrène avec une couronne de sortie de puissance 24 vers les roues. La denture planétaire 20 est la sortie de puissance vers la machine génératrice 11.

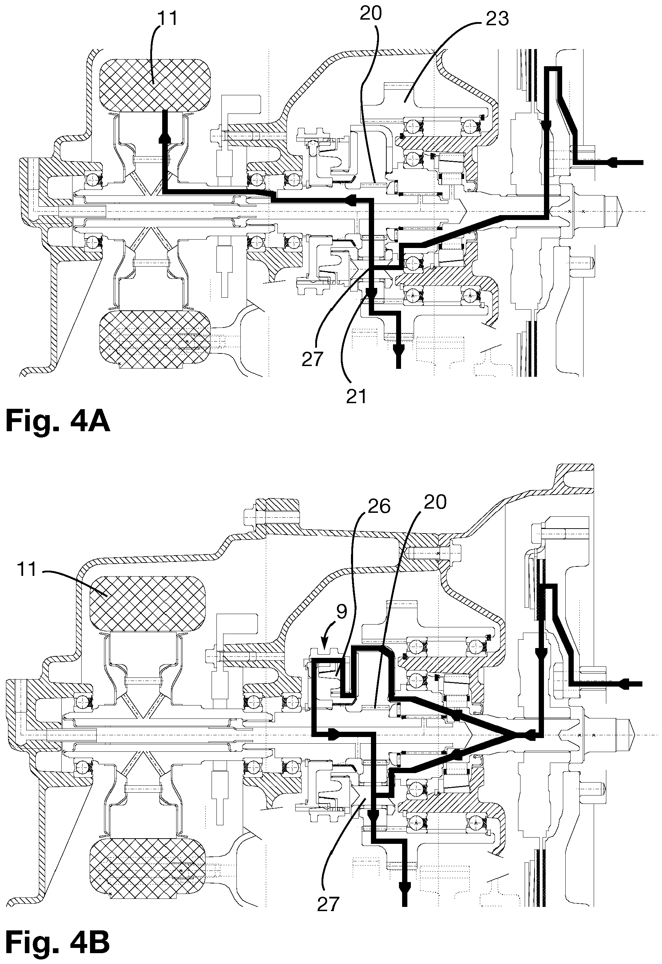

Le groupe de couplage 9 est placé de manière à réaliser une liaison entre le corps du porte-satellite, c'est à dire le moteur thermique et le planétaire, soit la génératrice. C'est un système à crabot capable de solidariser le planétaire et le porte-satellites du train. Ce système à crabot, est du type « *groupe synchro crabotage* » de boîte de vitesses manuelle, composé d'un moyeu 25 solidaire du planétaire 20, d'un cône crabot 26 solidaire du corps du porte-satellites 27 et d'un manchon coulissant 28, ou baladeur, à deux positions. Le coupleur est ouvert sur la figure 4A, et fermé sur la figure 4B. Pour éviter de la bruyance telle que des « *craquements* », le groupe de couplage comprend un anneau de synchronisation.

Ses déplacements sont contrôlés par un actionneur linéaire pneumatique, hydraulique, ou électrique, non représenté. Dans ce dernier cas, il est connecté au réseau électrique d'alimentation existant.

Lorsque le groupe est dé-craboté (figure 4A), le train 8 fonctionne en dérivation de puissance. La transmission est en mode e-CVT. La puissance du moteur thermique entre par le porte-satellites 27. La répartition de puissance est réalisée au niveau des satellites 21. Elle se partage entre le planétaire 20 pour la puissance prélevée par la génératrice 11, et la couronne 23, pour la puissance transmise directement aux roues.

Comme tous les trains épicycloïdaux, le train diviseur 8 obéit à des lois, dont les principales sont :

- somme des puissances nulle (puissance entrante = puissance sortante),

- couple au porte-satellites = couple au planétaire + couple à la couronne.

En fonction des vitesses de la couronne 23 (c'est-à-dire du véhicule) et du moteur thermique (dont on peut choisir un point de fonctionnement optimal), la vitesse de la génératrice est imposée, et la puissance prélevée (puissance dite dérivée) est fixée. Mais pour une vitesse du véhicule donnée, on peut caler le moteur à n'importe quel régime, grâce à la dérivation de puissance variable. On peut alors se trouver dans un mode de fonctionnement hybride série, typiquement au démarrage, où la puissance dérivée est proche de 100%. En revanche à haute vitesse, si la puissance dérivée est proche de 0%, le fonctionnement du véhicule est celui d'un véhicule hybride parallèle.

Sur la figure 4B, le système est craboté. Le couplage du moteur thermique et de la première machine électrique s'effectue entre l'arbre de planétaire 10 et le porte satellite 27 fixé sur l'arbre d'entrée 28 lié au vilebrequin 4 du moteur thermique.

Le fonctionnement en mode rapport fixe (sans dérivation de puissance) est le suivant. Le groupe de couplage 9 lie le porte-satellites 27 et le planétaire 20. La puissance du moteur thermique est partagée au niveau des satellites 21 entre le planétaire 20 et la couronne 23. La puissance du planétaire est restituée par le crabot 26 au corps du porte-satellites 27, ce qui revient à transférer au porte-satellites 27 la somme des puissances du moteur thermique et du planétaire. Ainsi, après son partage au niveau des satellites, la totalité de la puissance du moteur thermique se retrouve à la couronne. La génératrice 11 tourne au régime du moteur thermique. Elle peut être alors une simple inertie ou fonctionner en génératrice ou motrice.

En résumé, la transmission dispose d'un premier mode de fonctionnement, dans lequel le système de couplage est ouvert, où la puissance dérivée sur la première machine électrique varie en fonction du régime du moteur thermique, et d'un deuxième mode de fonctionnement dans lequel le système de couplage est fermé, où la totalité de la puissance du moteur thermique se retrouve sur la couronne de sortie du train.

En variante le manchon baladeur peut avoir une course en direction opposée, vers le carter. La transmission doit dans ce cas être alors équipée d'un second crabot qui bloque la génératrice : on obtient ainsi un second point de fonctionnement en hybride parallèle à rapport très long.

Le fonctionnement de la transmission est illustré par l'exemple suivant. Il concerne un véhicule équipé d'une transmission de type e-CVT à train diviseur de couple, se déplaçant à un point de fonctionnement stabilisé à la vitesse V=110 km/h, avec une puissance à la roue Proue = 50 kW. La raison du train, R = 2,5, et le rapport de réduction entre la couronne du train et les roues du véhicule, K = 4. Lorsque l'on ferme le système de couplage, le rapport $\omega_{ice}/\omega_{roue}$ K = 4. Le rendement de la transmission est maximum, puisque les deux machines ne sont plus pilotées électriquement. Le tableau ci-dessous illustre les gains obtenus par le blocage du train.

| | $\omega_{ice}$ | Couple ICE | Rdt ICE | Rdt e-CVT | K | Rdt global |
|---|---|---|---|---|---|---|
| | tr/min | Nm | % | % | - | % |
| fonctionnement e-CVT | 3730 | 141 | 30,2% | 90,5 | 3,9 | 27,3 |
| rapport fixe | 3811 | 132 | 30,9% | 94,9 | 4 | 29,3 |

Dans cet exemple, le point de fonctionnement classique sans rapport fixe est choisi de façon à réduire les pertes du système complet. Sur ce point de fonctionnement, le moteur a un rendement de 30,2%. La transmission a un rendement de 90,5%, compte tenu des pertes de conversion d'énergie des deux machines électriques et des pertes mécaniques.

Lorsqu'on utilise le rapport fixe (en crabotant le système de couplage), le rendement de la transmission augmente significativement pour atteindre 94,9%, car il n'y a plus de pertes de conversion dans les machines. Le rendement du moteur thermique augmente aussi, pour atteindre 30,9%. Le gain en consommation est de l'ordre de 7% si l'on passe sur le rapport fixe sur ce point.

Les gains possibles en consommation apportés par l'utilisation du rapport fixe sur l'ensemble de la plage d'utilisation du véhicule sont mis en évidence sur un exemple, à l'aide de la figure 5.

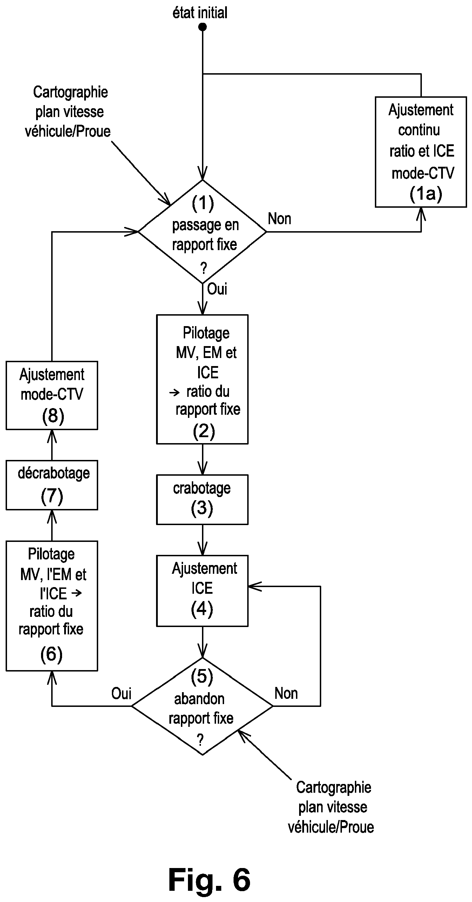

La figure 6 illustre de façon non limitative une stratégie de contrôle embarquée, par exemple dans le calculateur de gestion du moteur, permettant de déterminer s'il est intéressant, ou pas, d'utiliser le rapport fixe. La stratégie peut se baser sur une cartographie calculée hors ligne et stockée dans la mémoire du calculateur, sous forme de calibrations. La cartographie est établie de préférence dans un plan (vitesse du véhicule, puissance à la roue), qui fait ressortir l'intérêt du rapport fixe, d'un point de vue énergétique. Elle peut s'enrichir d'autres variables issues du contrôle moteur, et inclure des étapes préliminaires, telles que filtrage, hystérésis, adoption de modes de conduites particuliers (sport/éco). La cartographie détermine si le passage sur le rapport fixe est intéressant (étape 1). Si ce n'est pas le cas l'ajustement continu du ratio de transmission et du point de fonctionnement du moteur se poursuivent de façon classique en mode e-CVT (étape 1a). S'il est intéressant de passer sur le rapport fixe, la génératrice les deux machines (MV et EM) ainsi que le moteur thermique ICE sont pilotés afin d'obtenir en mode e-CVT le ratio du rapport fixe (étape 2). A l'étape 3, l'actionneur de crabotage est piloté pour coupler le porte-satellites et la couronne. L'ajustement continu du point de fonctionnement du moteur se poursuit sur le rapport fixe à l'étape 4. L'étape 5 détermine s'il est intéressant de quitter le rapport fixe à partir des mêmes données cartographiques que l'étape 1. Si non, retour sur l'étape 4. Si oui, le moteur thermique est les deux machines électriques sont pilotées pour être prêtes à établir le ratio courant rapport fixe après ouverture du coupleur (étape 6). L'actionneur ouvre le coupleur (étape 7). L'ajustement continu du ratio et du point de fonctionnement du moteur se poursuivent de façon classique en mode e-CVT à l'étape 8, comme à l'étape 1a.

En résumé, si le passage de la transmission sur le rapport fixe est adopté, le moteur thermique et les deux machines électriques sont pilotés pour établir le ratio du rapport fixe en mode e-CVT, avant d'effectuer le couplage de la couronne avec le porte-satellites. Le choix de passer sur le rapport fixe de la transmission peut être fait à partir d'une cartographie indiquant s'il est intéressant de basculer sur le rapport fixe d'un point de vue énergétique en fonction de la vitesse du véhicule et de la puissance à la roue.

Les avantages de l'invention sont nombreux. Parmi ceux-ci, il faut souligner que l'absence de rupture de couple lors de l'activation et de la désactivation du rapport fixe, et le gain en consommation significatif, obtenus grâce à l'introduction du groupe de couplage et de son actionneur.

Sans sortir du cadre de l'invention, la configuration de base de la transmission e-CVT peut être différence du mode de réalisation non limitatif illustré par les figures. Ainsi, en variante, le moteur thermique peut être relié à la couronne du train épicycloïdal, la première machine électrique au planétaire, et la deuxième machine motrice 13 au porte-satellites du train.

**Revendications**

1. Transmission infiniment variable à train épicycloïdal diviseur de puissance (8) qui relie mécaniquement un moteur thermique et deux machines électriques (11, 13) échangeant entre elles de la puissance électrique, transmission dans laquelle la puissance mécanique du moteur thermique introduite dans le train (8) se répartit au niveau d'un élément (21) du train entre une première voie de puissance où elle est prélevée par une première machine électrique (11), et une deuxième voie de puissance où elle est réunie à la puissance mécanique de la deuxième machine électrique (13) et se regroupe sur un élément de sortie du train (8) d'où elle est transmise aux roues du véhicule sur un rapport de transmission variable en fonction de la puissance électrique échangée entre les deux machines électriques (11, 13), **caractérisée en ce qu'**elle comporte un groupe de couplage (9) entre la première machine électrique (11) et les deux autres sources motrices, constitué d'un un système à crabot capable de réaliser une liaison entre le planétaire (20) et le porte-satellites (27) du train (8) pour faire tourner la transmission en bloc sur un rapport fixe.

2. Transmission infiniment variable selon la revendication 1, **caractérisée en ce que** le moteur thermique est relié au porte-satellites (27) du train (8), la première machine électrique (11) à son planétaire (20), et la deuxième machine électrique (13) à sa couronne de sortie (23) .

3. Transmission infiniment variable selon la revendication 1, **caractérisée en ce que** le moteur thermique est relié à la couronne, la première machine électrique (11) est reliée au planétaire, et la deuxième machine électrique (13) est reliée au porte-satellites.

4. Transmission infiniment variable selon la revendication 2, **caractérisée en ce que** le couplage du moteur thermique et de la première machine électrique (11) s'effectue entre l'arbre de planétaire (10) et le porte satellite (27) fixé sur l'arbre d'entrée (28) lié au vilebrequin (4) du moteur thermique.

5. Transmission infiniment variable selon la revendication 4, **caractérisée en ce que** le planétaire (20) est constitué par une denture fixe de l'arbre de planétaire (10) .

6. Transmission infiniment variable selon l'une des revendication précédentes, **caractérisé en ce que** le groupe de couplage (9) est un groupe de synchro-crabotage composé d'un moyeu (25) solidaire du planétaire (20), d'un cône crabot (26) solidaire du corps du porte-satellites (27) et d'un manchon coulissant (28).

7. Transmission infiniment variable selon l'une des revendications précédentes, **caractérisée en ce que** le groupe de couplage (9) est en appui sur le carter de volant (1) de la transmission par une roue libre (30) avec limiteur de couple.

8. Transmission infiniment variable selon l'une des revendications précédentes, **caractérisée en ce qu'**elle comporte un arbre secondaire (12) portant la deuxième machine électrique (13), et un arbre intermédiaire (14) portant un pignon intermédiaire de motrice (15) et un pignon intermédiaire de génératrice et de moteur thermique (24), transférant l'ensemble du mouvement sur la couronne (16) du différentiel (17).

9. Transmission infiniment variable selon l'une des revendications précédentes, **caractérisée en ce qu'**elle présente une gouttière d'huile (18) forçant celle-ci à être au contact des flancs du rotor de la deuxième machine électrique (13).

10. Transmission selon l'une des revendications précédentes, **caractérisée en ce qu'**elle dispose d'un premier mode de fonctionnement dans lequel le groupe de couplage (9) est ouvert, où la puissance dérivée sur la première machine électrique (11) varie en fonction du régime du moteur thermique et d'un deuxième mode de fonctionnement dans lequel le groupe de couplage (9) est fermé, où la totalité de la puissance du moteur thermique se retrouve sur la couronne de sortie (23) du train (8).

11. Procédé de fonctionnement d'une transmission selon la revendication 10, **caractérisé en ce que** lorsque le passage de la transmission sur le rapport fixe est choisi, le moteur thermique et les deux machines électriques (11, 13) sont pilotés pour établir le ratio du rapport fixe en mode e-CVT, avant d'effectuer le couplage de la couronne (23) avec le porte-satellites (27).

12. Procédé de fonctionnement selon la revendication 11, **caractérisé en ce que** le choix de passer sur le rapport fixe de la transmission est fait à partir d'une cartographie indiquant s'il est intéressant de basculer sur le rapport fixe d'un point de vue énergétique, en fonction de la vitesse du véhicule et de la puissance à la roue.

ROUES + EM

MV

ICE

**Fig. 1**

Gain eCVT + rapport fixe [%]

Puissance à la roue (kW)

Vitesse véhicule (km/h)

**Fig. 5**

**Fig. 2**

**Fig. 3**

**Fig. 4A**

**Fig. 4B**

état initial

Cartographie
plan vitesse
véhicule/Proue

Ajustement
continu
ratio et ICE
mode-CTV
**(1a)**

**(1)**
passage en
rapport fixe
?

Non

Oui

Ajustement
mode-CTV
**(8)**

Pilotage
MV, EM et
ICE
→ ratio du
rapport fixe
**(2)**

décrabotage
**(7)**

crabotage
**(3)**

Pilotage
MV, l'EM et
l'ICE →
ratio du
rapport fixe
**(6)**

Ajustement
ICE
**(4)**

Oui

**(5)**
abandon
rapport fixe
?

Non

Cartographie
plan vitesse
véhicule/Proue

# Fig. 6

Europäisches
Patentamt

European
Patent Office

Office européen
des brevets

**RAPPORT DE RECHERCHE EUROPEENNE**

Numéro de la demande

EP 18 18 3210

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | WO 2016/152445 A1 (AISIN AW CO LTD)<br>29 septembre 2016 (2016-09-29)<br>* abrégé; figure 13 *<br>-& US 2017/349159 A1 (TAKAMI SHIGEKI [JP]<br>ET AL) 7 décembre 2017 (2017-12-07)<br>* alinéa [0078]; figure 13 * | 1,2,4-6,<br>8,10-12<br>3,9 | INV.<br>B60K6/445<br>B60K6/383<br>B60K6/387<br>B60K6/405<br>F16H3/72<br>F16H57/04 |
| A | ----- <br>US 2016/152130 A1 (KIM BAEK YU [KR] ET AL)<br>2 juin 2016 (2016-06-02)<br>* alinéas [0021], [0031], [0038],<br>[0039], [0045]; figures 7,8 * | 1-12 | ADD.<br>F16H37/08 |
| X<br>Y | ----- <br>JP 2010 036880 A (AISIN AW CO)<br>18 février 2010 (2010-02-18)<br>* abrégé; figure 10 * | 1,2,4-7,<br>10-12<br>3,9 | |
| Y<br>A | ----- <br>US 2016/107518 A1 (OKUWAKI SHIGERU [JP] ET<br>AL) 21 avril 2016 (2016-04-21)<br>* le document en entier * | 3<br>1,11,12 | |
| Y<br><br>A | ----- <br>WO 2009/060758 A1 (TOYOTA MOTOR CO LTD<br>[JP]; TATEMATSU KAZUTAKA [JP]; TAKETSUNA<br>YASUJI [J) 14 mai 2009 (2009-05-14)<br>* abrégé; figures 2-4 *<br>----- | 9<br><br>1 | DOMAINES TECHNIQUES RECHERCHES (IPC)<br>B60K<br>F16H |

Le présent rapport a été établi pour toutes les revendications

| Lieu de la recherche | Date d'achèvement de la recherche | Examinateur |
|---|---|---|
| Munich | 10 janvier 2019 | Wurzer, Oliver |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 18 3210

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2019

| Document brevet cité au rapport de recherche | Date de publication | Membre(s) de la famille de brevet(s) | Date de publication |
|---|---|---|---|
| WO 2016152445 A1 | 29-09-2016 | JP 6330969 B2<br>JP WO2016152445 A1<br>US 2017349159 A1<br>WO 2016152445 A1 | 30-05-2018<br>02-11-2017<br>07-12-2017<br>29-09-2016 |
| US 2017349159 A1 | 07-12-2017 | JP 6330969 B2<br>JP WO2016152445 A1<br>US 2017349159 A1<br>WO 2016152445 A1 | 30-05-2018<br>02-11-2017<br>07-12-2017<br>29-09-2016 |
| US 2016152130 A1 | 02-06-2016 | KR 20160065308 A<br>US 2016152130 A1 | 09-06-2016<br>02-06-2016 |
| JP 2010036880 A | 18-02-2010 | JP 5120650 B2<br>JP 2010036880 A | 16-01-2013<br>18-02-2010 |
| US 2016107518 A1 | 21-04-2016 | BR 112015028616 A2<br>CN 105209278 A<br>DE 112013007066 T5<br>JP WO2014184854 A1<br>KR 20150142052 A<br>US 2016107518 A1<br>WO 2014184854 A1 | 25-07-2017<br>30-12-2015<br>04-02-2016<br>23-02-2017<br>21-12-2015<br>21-04-2016<br>20-11-2014 |
| WO 2009060758 A1 | 14-05-2009 | JP 2009118712 A<br>WO 2009060758 A1 | 28-05-2009<br>14-05-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1125780 A